# EUROPEAN PATENT APPLICATION

(11) **EP 1 699 272 A1**
(43) Date of publication of application: **06.09.2006**
(21) Application number: 05394009.4
(22) Date of filing: 02.03.2005
(51) Int. Cl.: H05B 37/03, H05B 37/02

(54) **A PUBLIC LIGHTING ASSEMBLY WITH AMBIENT LIGHT DETECTION MEANS AND TRANSCEIVER**

(71) Applicant: Noontek Limited, Country Mayo (IE)
(72) Inventor: Noone, Sean, Belmullet County Mayo (IE); Durkan, Thomas, Balla County Mayo (IE); Dee, Joseph, Annacotty Limerick (IE); Brennan, Thomas, Dublin 6 (IE)
(74) Representative: Schütte, Gearoid

(57) **Abstract**

There is provided a street lamp assembly (15). The assembly (15) comprises a hollow lamp standard (16) mounting a luminaire (17) including a gas discharge lamp (18). Mounted also in conjunction with the luminaire (17) is a photoelectric cell (2), on the casing (3) which also mounts antenna (4) for a transceiver (10) of a WI-FI system. This may be mounted by a tube forming an enclosure in the lamp standard (16). The photoelectric cell (2) and the antenna (4) form the one sub-assembly which is mounted by a standard plug-in socket (6).

## Description

### Introduction

The present invention relates to a public lighting assembly comprising a hollow lamp standard mounting a luminaire and associated control equipment, the control equipment being connected to a light detection device mounted adjacent the luminaire by an electrical plug-in socket and in which a transceiver and associated antenna forming a node of a wireless broadcasting system is mounted on the assembly.

It has been known for some time that the use of low power wireless broadcasting systems is to be preferred over high power systems. Such Wi-Fi systems are said to be preferable in many instances because of concerns in relation to the radiation transmitted by the transceivers. Since public lighting systems are a source of power, it has been suggested that most of the Wi-Fi system, or at least the transceivers thereof, could be relatively easily mounted on the public lighting assembly. However, to do this requires considerable alteration of the lighting assembly and is not a simple operation. Ideally, what is required is to provide some efficient way of mounting the transceiver and its associated antenna on the lamp standard, while obtaining power from the lamp assembly.

The present invention is directed towards providing a way of mounting such a transceiver and associated antenna forming a node of a Wi-Fi system on a lamp standard.

### Statements of Invention

According to the invention, there is provided a public lighting assembly comprising a hollow lamp standard mounting a luminaire and associated control equipment, the control equipment being connected to a light detection device mounted adjacent the luminaire by an electrical plug-in socket and in which a transceiver and associated antenna forming a node of a wireless broadcasting system is mounted on the assembly characterised in that the antenna and light detection device are electrically connected to the plug-in socket. By connecting the antenna and light detection device to the plug-in socket, it is possible to use existing equipment and to rapidly and easily add transmitters to the public lighting assembly.

In one embodiment of the invention, the antenna and light detection device are mounted in the one enclosure.

In another embodiment of the invention, the transceiver is mounted in the hollow lamp standard.

Ideally, the plug-in socket is manufactured in accordance with the National Electrical Manufacturers Associated (NEMA) specifications.

There is provided an assembly in which each node is adapted to communicate with a plurality of adjacent nodes whereby failure of a node does not cause failure of the network. The transceiver may be a low-powered transmitter or a Wi-Fi transceiver.

### Detailed Description of the Invention

The invention will be more clearly understood from the following description of an embodiment thereof, given by way of example only, with reference to the accompanying drawings, in which:
Fig. 1 is an exploded part diagrammatic view of portion of a public lighting assembly according to the invention, and
Fig. 2 is a view of a construction of public lighting assembly incorporating the invention.

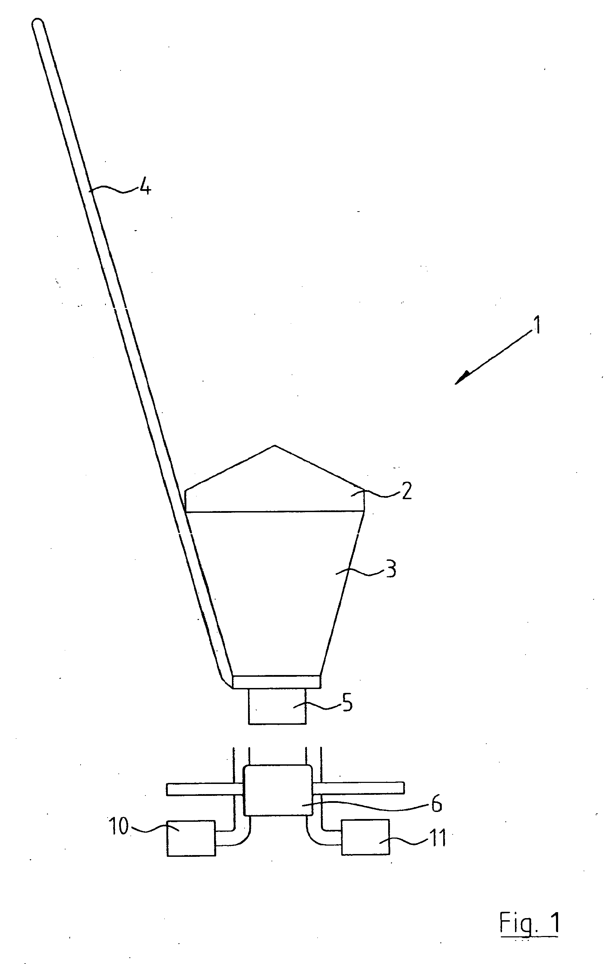

Referring to the drawings and initially to Fig. 1 thereof, there is illustrated a light detection device, indicated generally by the reference numeral 1, in this case a photoelectric cell 2 mounted in a casing 3 into which is mounted an antenna 4. The casing 4 has a male connector plug 5 for connection to an electrical plug-in socket 6 manufactured in accordance with the National Electrical Manufacturers Association (NEMA) standards, which in turn connects to a Wi-Fi transceiver 10 and to control equipment 11 for a luminaire, not shown. The luminaire normally has a plug-in socket, such as the plug-in socket 6, for its photoelectric cell 2. It will be appreciated that in use it is a simple matter to mount the antenna 4 on the light detection device 1 and to connect, through the male connector plug 5, to the socket 6 and hence to the transceiver 10. This means it is a simple matter to adapt existing light detection devices, such as a photoelectric cell, to carry the Wi-Fi system. In certain cases, the actual transceiver may be mounted within the photoelectric cell casing 3 and thus the whole assembly becomes a plug-in assembly, the power feed to the photoelectric cell also forming the power feed to the transceiver.

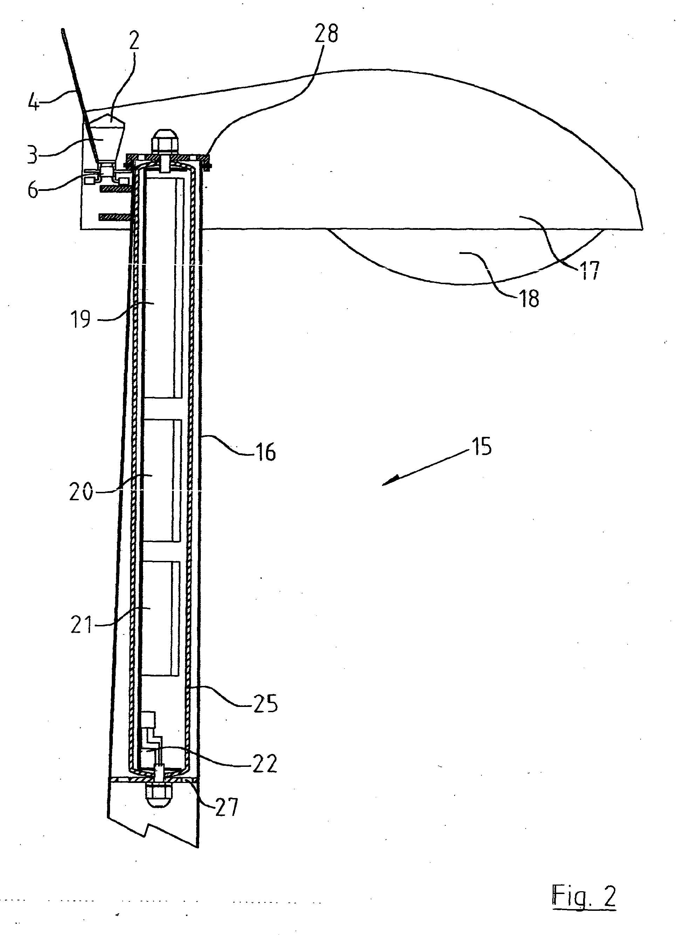

Referring to Fig. 2, there is illustrated an alternative construction of public lighting assembly, indicated generally by the reference numeral 15 comprising a hollow lamp column or standard 16 mounting a luminaire 17 containing a gas discharge lamp 18, all of conventional construction. In the lamp standard 16 is mounted control equipment comprising a microprocessor control ballast 19 and ancillary equipment 20. A Wi-Fi transceiver 21 is also mounted in the lamp standard 16. Main supply wires 22 are illustrated. The microprocessor control ballast 19, ancillary equipment 20 and transceiver 21 are mounted within a tubular casing forming an enclosure 25 to provide the one assembly which is secured at its distal end by a flexible bored washer 27 and at its proximal end by a bored end cap 28. This is a totally removable assembly so that the transceiver 21 is totally mounted within the lamp column and protected from vandalism and the elements.

It will be appreciated that each node may be adapted to communicate with a plurality of adjacent nodes whereby failure of a node does not cause failure of the network. It can operate as an access point, point-to-point bridge, point-to-multipoint bridge and a repeater. Obviously, all of these functions can be carried out by the one node.

Since it is now possible to provide very fast wireless performance with maximum wireless signal rates reaching up to 108 Mbps, it is possible to provide extremely fast transfer speeds, thus allowing ample bandwidth and the avoidance of network bottlenecks. Also, by providing a plurality of nodes, it is possible to reduce the power of the nodes and hence the radiation that will be relatively restricted, overcoming one of the main health concerns of such systems. Further, by providing the transceiver and antenna of the node effectively with the photoelectric cell, all the problems heretofore experienced are eliminated.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A public lighting assembly (15) comprising a hollow lamp standard (16) mounting a luminaire (17) and associated control equipment (11), the control equipment (11) being connected to a light detection device (1) mounted adjacent the luminaire (17) by an electrical plug-in socket (6) and in which a transceiver (10) and associated antenna (4) forming a node of a wireless broadcasting system is mounted on the assembly (15) **characterised in that** the antenna (4) and light detection device (1) are electrically connected to the piug-in socket (6).

2. An assembly (15) as claimed in claim 1, in which the antenna (4)and light detection device (1) are mounted in the one enclosure (25).

3. An assembly (15) as claimed in claim 1 or 2, in which the transceiver (10) is mounted in the hollow lamp standard (16).

4. An assembly (15) as claimed in any preceding claim, in which the plug-in socket (6) is manufactured in accordance with the National Electrical Manufacturers Associated (NEMA) specifications.

5. An assembly (15) as claimed in any preceding claim, in which each node is adapted to communicate with a plurality of adjacent nodes whereby failure of a node does not cause failure of the network.

6. An assembly (15) as claimed in any preceding claim, in which the transceiver (10) is a low-powered transmitter.

7. An assembly (15) as claimed in any preceding claim, in which the transceiver (10) is a Wi-Fi transceiver (21).
